# EUROPÄISCHE PATENTSCHRIFT

(11) **EP 0 801 023 B1**
(45) Veröffentlichungstag und Bekanntmachung des Hinweises auf die Patenterteilung: **30.10.2002**
(21) Anmeldenummer: 97250112.6
(22) Anmeldetag: 09.04.1997
(51) Int. Cl.: B66F 9/07, B66F 9/14, B65G 1/04

(54) **Vorrichtung zum Aus- und Einlagern einer Ladeeinheit, insbesondere für das Aus- und Einlagern in einem Warenlager**
Device for storing and destoring an article, in particular in a warehouse
Dispositif pour stocker et déstocker un article, en particulier dans un magasin

(30) Priorität: 09.04.1996 DE 19615990
(43) Veröffentlichungstag der Anmeldung: 15.10.1997
(73) Patentinhaber: Siemens Aktiengesellschaft, 80333 München (DE)
(72) Erfinder: Oser, Jörg, Univ. Prof. Dr.,, 8010 Graz (AT)

(56) Entgegenhaltungen:
- EP-A- 0 643 010
- DE-A- 3 917 485
- DE-A- 4 320 402
- US-A- 5 397 211

## Beschreibung

Die Erfindung betrifft eine Vorrichtung zum Aus- und Einlegen einer Ladeeinheit, insbesondere für das Aus- oder Einlegen in einem Warenlager, mittels einer niedrig bauenden Fördervorrichtung, die über die Ladeeinheit bewegbar ist und an ihren Enden in einer vertikalen Ebene gegenläufig mittels Schwenkantrieben schwenkbare Armpaare für voneinander beabstandete Ladeeinheiten aufweist, entsprechend dem Oberbegriff des Anspruchs 1. Eine solche Vorrichtung ist aus der DE 3 917 485 A1 bekannt.

Man unterscheidet Lastaufnahmemittel zum Ein- oder Auslagern von Ladeeinheiten nach der sogenannten Unterfahr- und der sogenannten Ziehtechnik.

Beim Unterfahren der Ladeeinheit sind die verwendeten Teleskopvorrichtungen durch die Last auf Biegung beansprucht. Unterfahrteleskope erfordern auch ein relativ großes vertikales Freimaß zwischen den Ladeeinheiten und sind zudem nur für den kostenintensiven Regalstahlbau mit Auflagewinkeln geeignet.

Nach der Ziehtechnik werden Ziehhaken bzw. Zieharme verwendet, und die Ladeeinheit wird auf ihrer Unterlage herausgezogen oder hineingeschoben. Diese Technik ist im allgemeinen nur für eine einfach tiefe Lagerung geeignet.

Es ist eine Vorrichtung zum Stapeln bzw. Entnehmen von Gegenständen bekannt (DE-39 17 485 A1), die für jedes der Regale in einem Regalförderzeug zumindest einen Puscher und einen Ziehhaken vorsieht. Puscher und Ziehhaken erfordern im Regalförderzeug in Ein-/Auslagerrichtung in Führungselementen erste und zweite Linearantriebe. Der Puscher kann in Ruhestellung nach oben geschwenkt werden.

Es ist weiterhin eine Transporteinrichtung zum Verschieben von Ladeeinheiten auf einer glatten Unterlage ohne Ladehilfsmittel, insbesondere für den Hubwagen eines Regalbediengerätes bekannt (DE 43 31 920 A1). Für unterschiedlich große Ladeeinheiten soll ohne Ladehilfsmittel ausgekommen werden. Auch diese Bauweise ist über der Ladeeinheit verhältnismäßig raumaufwendig. Die in eine horizontale Lage vor- und/oder hinter die Ladeeinheit gegenläufig ein- oder ausschwenkbaren Schieberarmpaare können bei mit seitlichem Spaltabstand stehenden Ladeeinheiten nicht verwendet werden.

Der Erfindung liegt die Aufgabe zugrunde, mittels einer niedrigbauenden Fördervorrichtung, die über die Ladeeinheit bewegbar ist und an den Enden schwenkbaren Armpaaren für voneinander beabstandete Ladeeinheiten aufweist, unterschiedlich breite, hohe Ladeeinheiten sicher erfassen zu können.

Die Aufgabe wird bei einer gattungsgemäßen Vorrichtung mit den kennzeichnenden Merkmalen des Anspruches 1 gelöst. Die Unteransprüche beinhalten vorteilhafte Ausgestaltungen.

Der Vorteil der Vorrichtung besteht darin, daß (in der vorteilhaften Ausgestaltung nach den Unteransprüchen) der Schwenk- und Klemmvorgang zum Ein- und Auslagern einer Ladeeinheit mit nur einem einzigen Antriebsmotor und einer relativ einfachen Steuerungstechnik für die Stellbewegungen bei beliebiger Einstellung des Schwenkwinkels durchgeführt werden kann. Darüber hinaus erlaubt die Vorrichtung eine extrem flache Bauweise, wodurch der Volumennutzungsgrad des Warenlagers steigt. Unter diesem Gesichtspunkt ergeben sich entsprechende wirtschaftliche und funktionelle Vorteile.

In Ausgestaltung der Erfindung ist vorgesehen, daß die Armpaare an den Enden der Fördervorrichtung jeweils in die Profil-Höhe eines Flachteleskop-Abschnitts einschwenkbar sind. Auch diese Maßnahme dient daher der niedrigen Bauweise und vor allen Dingen dem Arbeiten in einem niedrigen Lagerfach, wobei dieses zur besseren Volumenausnutzung führt.

In Weiterbildung der Erfindung ist vorgesehen, daß die Antriebsstränge unmittelbar benachbart und parallelverlaufend liegen. Mit den gegenläufig schwenkbaren Armhebeln können sowohl relativ breite als auch relativ hohe sowie in einem bestimmten Verhältnis Höhe zu Breite stehende Ladeeinheiten bedient werden.

Zu weiterer Ausgestaltung ist vorgesehen, daß die Schwenkantriebsstränge im Bereich der Armhebel mittels einer Stirnradstufe als Querantriebsübertragung miteinander verbunden sind. Diese Maßnahme kommt der kompakten Anordnung der beiden Antriebsstränge und auch der Einschwenkbarkeit der Armhebel in das Profil des betreffenden Teleskopabschnitts zugute.

Eine Weiterausbildung der Erfindung besteht darin, daß für unterschiedlich breite und/oder in der Höhe unterschiedliche Ladeeinheiten eine Steuereinrichtung für die Stellbewegung der Armpaare bzw. der Armhebel vorgesehen ist. Die Stellbewegung kann je nach den Abmessungen der Ladeeinheit daher programmgesteuert ausgeführt werden.

Eine weitere Ausgestaltung sieht vor, daß in dem Flachteleskopabschnitt der Fördervorrichtung in ihrer Förderrichtung beidendig Linearführungen für Drehlager der Armpaare angeordnet sind und daß die Schwenkantriebsstränge jeweils in getrennte Längsabschnitte aufgeteilt sind, die mittels axialverschieblichen Drehmomentenübertragungsgliedern miteinander verbunden sind. Diese Maßnahme bedeutet Vorteile für eine Anpassung der horizontalen Armpaarabstände auf die unterschiedlichsten Längen der Ladeeinheiten.

Weitere Vorteile ergeben sich daraus, daß die Drehmomentenübertragungsglieder jeweils aus einer Gewindemutter bestehen, in die jeweils ein Gewindeabschnitt des jeweiligen Antriebsstrang-Abschnitts eingreift und daß die Gewindemutter ein Gehäuse bildet, in das dem Gewindeabschnitt gegenüberliegend ein folgender Antriebsstrang-Abschnitt eingreift, auf dessen Ende ein Anschlag für eine Ausfahrwegbegrenzung in Förderrichtung angeordnet ist. Daraus ergeben sich Vorteile für das Lösen und Klemmen der betreffenden Ladeeinheit in Abhängigkeit unterschiedlicher Abmessungen der Ladeeinheit.

Die Antriebsübertragung ist nunmehr dahingehend gestaltet, daß in den Drehmomentenübertragungsgliedern jeweils zwischen Gewindeabschnitt und Antriebsstrang-Abschnitt eine schaltbare Kupplung angeordnet ist. Über diese schaltbare Kupplung kann der Schwankantrieb daher entweder ein- oder abgeschaltet werden, wobei der Antriebsfluß umgeleitet werden kann, um andere Bewegungen auszuführen.

In Weiterbildung der Erfindung wird vorgeschlagen, daß auf der Motorwelle des Antriebsmotors ein Drehwinkelgeber und/oder im Bereich eines oder mehrerer Antriebsstrang-Abschnitte ein Drehwinkelsensor mit auf dem jeweiligen Antriebsstrang-Abschnitt angeordnetem, dem jeweiligen Drehwinkelsensor zugeordneten Signalgeber vorgesehen ist. Aufgrund dieser Meßelemente ist es möglich, den Antriebsmotor und/oder die Kupplung zu schalten.

Hierbei kann eine genaue Schaltung hinsichtlich des Zeitpunktes bzw. des Weges dadurch erreicht werden, daß die Bewegung in Förderrichtung mittels einer Schaltfahne und Klemmwegsensoren begrenzt ist, die den Antriebsmotor im Schaltzustand der Klemmstellung abschalten.

Hinsichtlich größerer Lastmassen ist es ferner vorteilhaft, wenn die Begrenzung der Bewegung in Förderrichtung durch eine zwischen dem Anschlag und dem Gehäuse der Gewindemutter eingesetzte Druckfeder gebildet ist.

Beim Einsatz der Vorrichtung, insbesondere in einem Warenlager, bei dem eine Fördereinrichtung über die Ladeeinheit verfahren wird und bei dem an den Enden der Ladeeinheit Armpaare in den Spalt zu einer weiteren Ladeeinheit abgeschwenkt werden, wird nach Erreichen des der Breite bzw. Höhe der Ladeeinheit entsprechenden Schwenkwinkels der Armpaare die Armpaare festgebremst, danach der Antrieb zum Schwenken der Armpaare unterbrochen wird, daß eine Klemmbewegung durch Annähern der Armpaare in horizontaler Richtung durchgeführt, was durch Umschalten des Antriebs auf einen Anstellantrieb erfolgt, wobei die beidendigen festgebremsten Armpaare aufeinanderzubewegt werden.

Hierbei ist noch vorteilhaft, daß das horizontale Aufeinanderzubewegen der Armpaare durch Abschalten des Anstellantriebs oder durch eine mechanische Krafteinstellung begrenzt wird.

Ein Ausführungsbeispiel der Erfindung ist in der Zeichnung dargestellt und wird im folgenden näher beschrieben. Es zeigen
- Fig. 1: eine Draufsicht auf die Vorrichtung mit durch einen Spalt getrennten Ladeeinheiten und die
- Fig. 2 bis 6: unterschiedliche Stellungen der Armpaare in Stirnaufsicht.

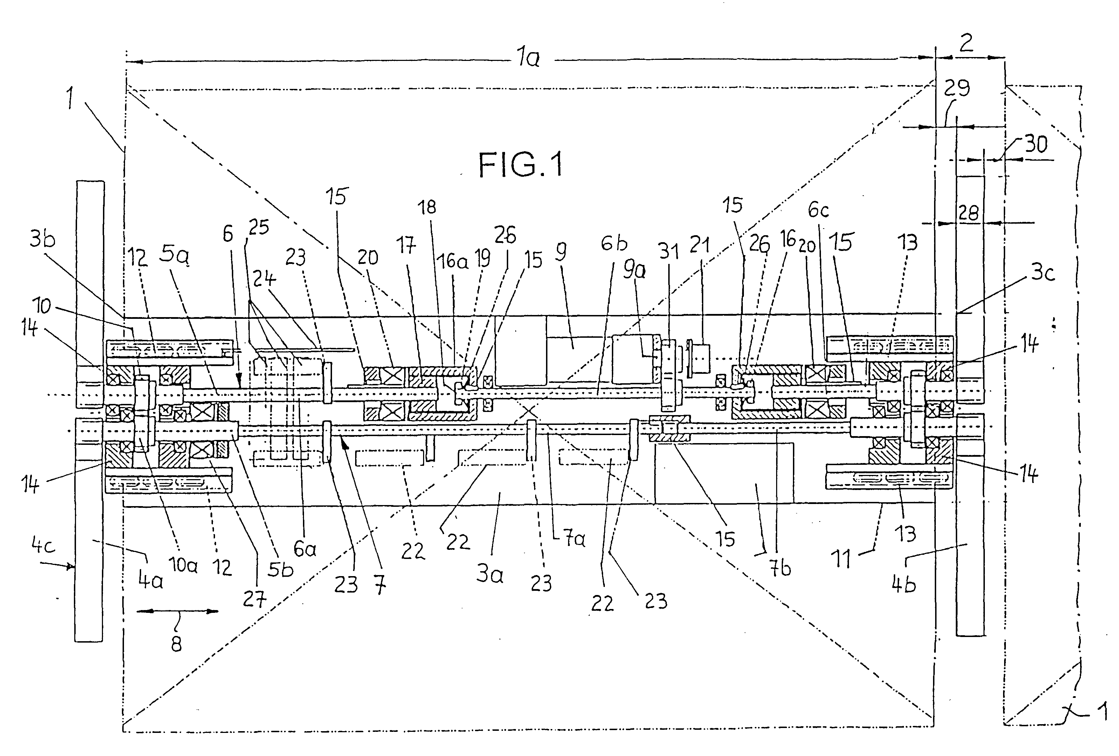

Die Vorrichtung für den Transport von Ladeeinheiten 1 mit einer Länge 1a, wobei Ladeeinheiten mit einem Spalt 2 beabstandet nebeneinander oder hintereinander abgesetzt sind, dient insbesondere für das Aus- oder Einlagern in einem Warenlager, wie z.B. einem Warenhochlager. Hierbei wird eine niedrigbauende Fördervorrichtung 3 über eine Ladeeinheit 1 bewegt. An den Enden 3b, 3c der Fördervorrichtung 3, die einen am weitesten ausfahrbaren Teleskopabschnitt 3a einer Teleskopiervorrichtung in Flachbauweise aufweist, sind schwenkbare Armpaare 4a und 4b drehgelagert (Fig. 1).

Die Armpaare 4a, 4b sind jeweils auf Schwenkachsen 5a, 5b mit Schwenkantriebssträngen 6 und 7 verbunden, die in Längsrichtung 8 der Fördervorrichtung 3 verlaufen. Nur einer der Schwenkantriebsstränge 6 oder 7 ist mittels eines einzigen Antriebsmotors 9 angetrieben. Die Schwenkantriebsstränge 6 und 7 sind in den Bereichen der Armpaare 4a, 4b mittels einer Querantriebsübertragung 10 so verbunden, daß die Antriebskraft von einem Schwenkantriebsstrang 6 auf den anderen Schwenkantriebsstrang 7 übertragen wird oder umgekehrt.

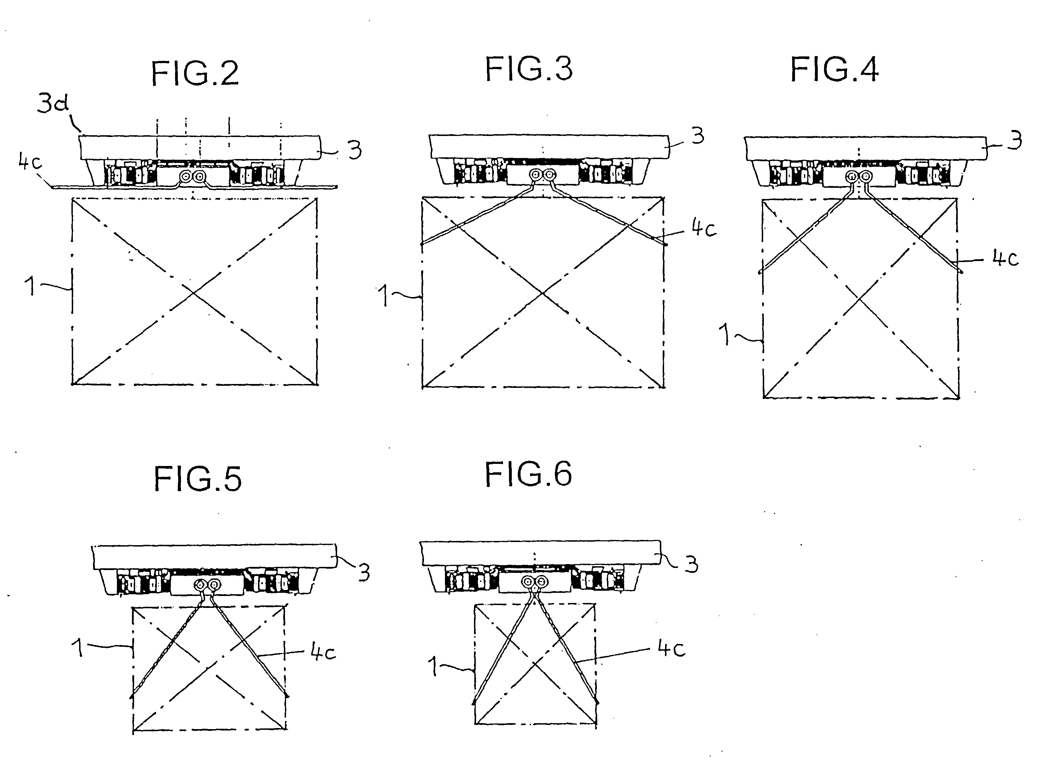

Wie sich aus Fig. 2 ergibt, sind die Armpaare 4a, 4b an den Enden 3b, 3c der Fördervorrichtung 3 jeweils in die Profil-Höhe eines Teleskopabschnittes 3a eingeschwenkt.

Wie aus Fig. 1 ersichtlich ist, liegen die Schwenkantriebsstränge 6 und 7 unmittelbar benachbart und verlaufen parallel, wobei die Armpaare 4a, 4b aus jeweils gegenläufig schwenkbaren Armhebeln 4c gebildet sind. Die Schwenkantriebsstränge 6, 7 sind im Bereich der Armhebel 4c mittels einer Stirnradstufe 10a miteinander verbunden. Außerdem ist für unterschiedlich breite und/oder in der Höhe unterschiedliche Ladeeinheiten 1 eine Programmsteuerung für Schwenkwinkel (vgl. Fig. 2 bis 6) der Armpaare 4a,4b bzw. der Armhebel 4c vorgesehen.

In dem am weitesten ausfahrbaren Flachteleskopabschnitt 3a der Fördervorrichtung 3 sind an den Enden 3b und 3c Linearführungen 12 und 13 für Drehlager 14 angeordnet. Der Schwenkantriebsstrang 6 ist in getrennte Längsabschnitte 6a, 6b und 6c gegliedert. Analog ist der Schwenkantriebsstrang 7 in getrennte Längsabschnitte 7a und 7b eingeteilt. Die einzelnen Längsabschnitte 6a, 6b, 6c, 7a, 7b sind mittels axialverschiebbaren Drehmomentenübertragungsgliedern 15 miteinander verbunden. Die Drehmomentenübertragungsglieder 15 bestehen jeweils aus einer Gewindemutter 16, in die jeweils ein Gewindeabschnitt 17 des jeweiligen Antriebs-Längsabschnitts 6a, 6b, 6c, 7a, 7b eingreift. Die Gewindemutter 16 bildet ein Gehäuse 16a, in das dem Gewindeabschnitt 17 gegenüberliegend ein auf die Antriebsstrang-Längsabschnitte 6a und 7a folgender Antriebsstrang-Längsabschnitt 6b, 6c, 7b eingreift. Auf dem jeweiligen Ende 18 befindet sich ein Anschlag 19 für eine Ausfahrwegbegrenzung.

In den Drehmomentenübertragungsgliedern 15 ist jeweils zwischen dem Gewindeabschnitt 17 und einem Antriebsstrang-Längsabschnitt 6a, 6b, 6c bzw. 7a,7b eine schaltbare Kupplung 20 angeordnet.

Auf der Motorwelle 9a des Antriebsmotors 9 ist ein Drehwinkelgeber 21 und/oder im Bereich eines oder mehrerer Antriebsstrang-Längsabschnitte 6a,6b,6c bzw. 7a, 7b ein Drehwinkelsensor 22 mit auf dem jeweiligen Antriebsstrang-Längsabschnitt 6a, 6b, 6c; 7a, 7b angeordnetem, dem jeweiligen Drehwinkelsensor zugeordneten Signalgeber 23 vorgesehen.

Die Axialbewegung eines der Antriebsstrang-Längsabschnitte 6a, 6b, 6c;7a,7b wird über eine Schaltfahne 24 und Klemmwegsensoren 25 gemessen und begrenzt, die den Antriebsmotor 9 im Schaltzustand der Klemmstellung abschalten. Die Begrenzung der Axialbewegung ist durch eine zwischen dem Anschlag 19 und dem Gehäuse 16a der Gewindemutter 16 eingesetzte Druckfeder 26 gebildet. Zum Festsetzen der Armpaare 4a, 4b sind außerdem elektromechanische Bremsen 27 im Bereich der Drehlager 14 angeordnet.

Das Ein- bzw. Auslagern der Ladeeinheiten 1 wird in der Weise durchgeführt, daß nach Erreichen des der Breite bzw. der Höhe der Ladeeinheit 1 entsprechenden Schwenkwinkels der Armpaare 4a, 4b die Armpaare festgebremst werden mittels der elektromechanischen Bremse 27, daß danach der Antrieb zum Schwenken der Armpaare 4a,4b unterbrochen wird, daß eine Klemmbewegung der Ladeeinheit 1 durch horizontales Annähern der Armpaare 4a,4b erfolgt, was durch Umschalten des Antriebs auf einen Anstellantrieb erfolgt, wobei die beidendigen, festgebremsten Armpaare 4a,4b jeweils aufeinanderzubewegt werden. Dieses Aufeinanderzubewegen der Armpaare 4a,4b durch Abschalten des Antriebsmotors 9 wird durch eine mechanische Krafteinstellung begrenzt.

Die Fördervorrichtung 3 kann als vorderster Teil einer ausfahrbaren Teleskopvorrichtung ausgestaltet sein, wobei die Teleskopvorrichtung in Überfahrtechnik zum Ein- und Auslagern von unterschiedlich hohen und breiten Ladeeinheiten 1 in einem mehrfachtiefen Fachboden-Regal eingesetzt wird. An den Enden dieser Teleskopvorrichtung, die der Fördervorrichtung 3 entspricht, befinden sich die Armpaare 4a bzw. 4b und bilden in Längsrichtung 8 einen Klemmantrieb für die Ladeeinheit 1. Vorteilhaft für einen hohen Volumennutzungsgrad ist der Einsatz eines Fachboden-Regals mit weniger Stehern, als dies für ein Winkelauflage-Regal nötig ist sowie die seitlich dichte und mehrfachtiefe Anordnung der Ladeeinheiten 1 in einem Regalfeld.

Die mehrfachtiefe Anordnung von Ladeeinheiten in einem Regalfeld erfordert die Umlagerung der vorderen Ladeeinheiten 1, wenn auf die dahinter tieferliegende Ladeeinheit 1 zurückgegriffen werden muß. In Fig. ist dieser Fall beispielhaft dargestellt. Beim Zugriff auf die vordere oder hintere Ladeeinheit 1 führt die Fördervorrichtung 3 mit den in die horizontale Ausgangslage (Fig. 2) eingeklappten Armpaaren 4a bzw. 4b in einen vertikalen Spalt 2 zwischen der Vorderkante der Ladeeinheit 1 und der Hinterkante der Ladeeinheit 1. In diesem Zustand stehen die Armpaare 4a, 4b mit ihrer Dicke 28 im vertikalen Spalt 2.

Zur Lastübernahme ist zunächst ein Schwenkvorgang der Armpaare 4a, 4b in den vertikalen Spalt 2 zwischen den Ladeeinheiten-Reihen erforderlich. Dazu treibt der Antriebsmotor 9 über ein Getriebe 31 den im Grundrahmen 11 drehgelagerten Antriebsstrang-Längsabschnitt 6b an. Der Antriebsstrang-Längsabschnitt 6b treibt mittels dem axialverschieblichen Drehmomentenübertragungsglied 15 die Gewindemutter 16 an, die über die beiden geschlossenen Kupplungen 20 die Drehbewegung auf die beiden gegenläufigen Stirnradstufen 10a überträgt. Die gleichzeitige Drehbewegung und kinematische Kopplung der beiden Armpaare 4a, 4b wird mit einem durchlaufenden Anfahrstrang-Längsabschnitt 7b erreicht. Je nach dem gewünschten Schwenkwinkel für die Armpaare 4a, 4b wird der Stellwinkel über Drehwinkelsensoren 22 oder einen Drehwinkelgeber 21 begrenzt. Nach Erreichen des gewünschten Schwenkwinkels schließt zuerst die Bremse 27 und hält damit die Armpaare 4a, 4b fest, worauf anschließend die beiden Kupplungen 20 geöffnet werden.

Im nächsten Schritt erfolgt die Klemmbewegung durch axiale Zustellung der beiden Armpaare, welche längsverschieblich in den Linearführungen 12 und 13 beweglich sind. Die Längsbewegung wird durch Einschalten des Antriebsmotors 9 über die Stirnradstufe 10a auf den Längsabschnitt 6b und die drehfest, aber längsverschiebliche Gewindemutter 16 erreicht, welche die beiden drehfest gebremsten Schwenkachsen 5a und 5b mit den beiden Gewindespindeln in gegeneinander gerichtete Axialbewegungen der Schwenkachsen 5a,5b, der Armrahmen und der beiden Armpaare 4a und 4b umsetzt.

Die Axialbewegung wird durch eine Schaltfahne 24 über die Klemmwegsensoren 25 begrenzt, indem je nach dem gewünschten axialen Stellweg der Axialhub durch Abschalten des Antriebsmotors 9 begrenzt wird. Eine mechanische Kraftbegrenzung zwischen den Armpaaren 4a, 4b und den Stirnflächen der Ladeeinheit 1 wird durch vorgespannte Druckfedern 26 beidseitig begrenzt. Durch die symmetrische Klemmung der beiden Armpaare 4a und 4b wird die Ladeeinheit 1 gleichzeitig an beiden Stirnflächen erfaßt. Anschließend wird die Ladeeinheit 1 durch eine geeignete Stellbewegung de Grundrahmens 11 bewegt bzw. ein- oder ausgelagert.

Das Lösen und anschließende Hochschwenken der einzelnen Armhebel 4c beider Armpaare 4a und 4b erfolgt in der umgekehrten Reihenfolge wie beim vorstehend beschriebenen Abschwenk- bzw. Klemmvorgang.

## Patentansprüche

1. Vorrichtung zum Aus- und Einlegen einer Ladeeinheit, insbesondere für das Ausoder Einlegen in einem Warenlager, mittels einer niedrig bauenden Fördervorrichtung, die über die Ladeeinheit bewegbar ist und an ihren Enden in einer vertikalen Ebene gegenläufig mittels Schwenkantrieben schwenkbare Armpaare für voneinander beabstandete Ladeeinheiten aufweist,
**dadurch gekennzeichnet,**
**daß** die Fördervorrichtung als Flachteleskop ausgebildet ist, daß die Armpaare an einem am weitesten ausfahrbaren Flachteleskopabschnitt (3a) in Förderrichtung vorn und hinten angeordnet sind, daß Schwenkachsen (5a, 5b) der Armpaare (4a, 4b) jeweils mit Schwenkantriebssträngen (6, 7) verbunden sind, die in Längsrichtung (8) des am weitesten ausfahrbaren Flachteleskopabschnitts (3a) verlaufen und daran gelagert sind, daß nur ein Schwenkantriebsstrang (6 oder 7) mittels eines Antriebsmotors (9) angetrieben ist und daß die Schwenkantriebsstränge (6, 7) in den Bereichen der Armpaare (4a, 4b) mittels einer Querantriebsübertragung (10) antriebsmäßig verbunden sind, wobei ein Schwenkwinkel einstellbar ist.

2. Vorrichtung nach Anspruch 1,
**dadurch gekennzeichnet,**
**daß** die Armpaare (4a,4b) an den Enden (3a,3b) des Flachteleskopabschnitts (3a) jeweils in dessen Profilhöhe einschwenkbar sind.

3. Vorrichtung nach einem der Ansprüche 1 oder 2,
**dadurch gekennzeichnet,**
**daß** die Schwenkantriebsstränge (6,7) unmittelbar benachbart und parallel verlaufend liegen.

4. Vorrichtung nach Anspruch 3,
**dadurch gekennzeichnet,**
**daß** die Schwenkantriebsstränge (6,7) im Bereich der Armhebel (4c) mittels einer Stirnradstufe (10a) als Querantriebsübertragung (10) miteinander verbunden sind.

5. Vorrichtung nach einem der Ansprüche 1 bis 4,
**dadurch gekennzeichnet,**
**daß** für unterschiedlich breite und/oder in der Höhe unterschiedliche Ladeeinheiten (1) eine Programmsteuerung die Stellbewegung der Armpaare (4a,4b) bzw. der Armhebel (4c) steuert.

6. Vorrichtung nach einem der Ansprüche 1 bis 5,
**dadurch gekennzeichnet,**
**daß** in dem Flachteleskopabschnitt (3a) der Fördervorrichtung (3) in ihrer Förderrichtung beidendig Linearführungen (12,13) für Drehlager (14) der Armpaare (4a,4b) angeordnet sind und daß die Schwenkantriebsstränge (6,7) jeweils in getrennte Längsabschnitte (6a,6b,6c,7a,7b) aufgeteilt sind, die mittels axial verschieblichen Drehmomentenübertragungsgliedern (15) miteinander verbunden sind.

7. Vorrichtung nach einem der Ansprüche 1 bis 6,
**dadurch gekennzeichnet,**
**daß** die Drehmomentenübertragungsglieder (15) jeweils aus einer Gewindemutter (16) bestehen, in die jeweils ein Gewindeabschnitt (17) des jeweiligen Antriebsstrang-Längsabschnitts (6a,6b,6c,7a,7b) eingreift und daß die Gewindemutter (16) ein Gehäuse (16a) bildet, in das dem Gewindeabschnitt (17) gegenüberliegend ein folgender Antriebsstrang-Längsabschnitt (6b,6c,7b) eingreift, auf dessen Ende (18) ein Anschlag (19) für eine Ausfahrwegbegrenzung in Förderrichtung angeordnet ist.

8. Vorrichtung nach Anspruch 7,
**dadurch gekennzeichnet,**
**daß** in den Drehmomentenübertragungsgliedern (15) jeweils zwischen dem Gewindeabschnitt (17) und dem Antriebsstrang-Längsabschnitt (6a,6b,6c,7a,7b) eine schaltbare Kupplung (20) angeordnet ist.

9. Vorrichtung nach einem der Ansprüche 1 bis 8,
**dadurch gekennzeichnet,**
**daß** auf der Motorwelle (9a) des Antriebsmotors (9) ein Drehwinkelgeber (21) und/oder im Bereich eines oder mehrerer Antriebsstrang-Längsabschnitte (6a,6b,6c;7a,7b) ein Drehwinkelsensor (22) mit auf dem jeweiligen Antriebsstrang-Längsabschnitt (6a,6b,6c;7a,7b) angeordnetem, dem jeweiligen Drehwinkelsensor (22) zugeordneten Signalgeber (23) vorgesehen ist.

10. Vorrichtung nach einem der Ansprüche 1 bis 9,
**dadurch gekennzeichnet,**
**daß** die Bewegung in Förderrichtung mittels einer Schaltfahne (24) und Klemmwegsensoren (25) begrenzt ist, die den Antriebsmotor (9) im Schaltzustand der Klemmstellung abschalten.

11. Vorrichtung nach Anspruch 10,
**dadurch gekennzeichnet,**
**daß** die Begrenzung der Bewegung in Förderrichtung durch eine zwischen dem Anschlag (19) und dem Gehäuse (16a) der Gewindemutter (16) eingesetzte Druckfeder (25) gebildet ist.

## Claims

1. Apparatus for retrieving and storing a loading unit, in particular for retrieval or storage in a warehouse, by means of a low-level conveying apparatus which can be moved over the loading unit and, at its end, has pairs of arms which can be pivoted in opposite directions in a vertical plane, by means of pivoting drives, and are intended for spaced-apart loading units, **characterized in that** the conveying apparatus is designed as a flat telescope, **in that** the pairs of arms are arranged at the front and rear, as seen in the conveying direction, of a furthest extendable flat-telescope section (3a), **in that** pivot axes (5a, 5b) of the pairs of arms (4a, 4b) are each connected to pivoting drive trains (6, 7), which run in the longitudinal direction (8) of the furthest extendable flat-telescope section (3a) and are mounted thereon, **in that** only one pivoting drive train (6 or 7) is driven by means of a drive motor (9), and **in that** the pivoting drive trains (6, 7) are connected in drive terms by means of a transverse drive transmission (10) in the region of the pairs of arms (4a, 4b), it being possible to adjust a pivoting angle.

2. Apparatus according to Claim 1, **characterized in that** the pairs of arms (4a, 4b) at the ends (3a, 3b) of the flat-telescope section (3a) can be pivoted into the profile height of the latter in each case.

3. Apparatus according to either of Claims 1 or 2, **characterized in that** the pivoting drive trains (6, 7) are directly adjacent and run parallel.

4. Apparatus according to Claim 3, **characterized in that** the pivoting drive trains (6, 7) are connected to one another in the region of the arm levers (4c) by means of a cylindrical-gear stage (10a) as transverse drive transmission (10).

5. Apparatus according to one of Claims 1 to 4, **characterized in that**, for loading units (1) of different widths and/or different heights, a program controller controls the actuating movement of the pairs of arms (4a, 4b) and/or of the arm levers (4c).

6. Apparatus according to one of Claims 1 to 5, **characterized in that**, arranged at both ends of the flat-telescope section (3a) of the conveying apparatus (3), as seen in the conveying direction of the latter, are linear guides (12, 13) for rotary bearings (14) of the pairs of arms (4a, 4b), and **in that** the pivoting drive trains (6, 7) are divided up in each case into separate longitudinal sections (6a, 6b, 6c, 7a, 7b), which are connected to one another by means of axially displaceable torque-transmission members (15).

7. Apparatus according to one of Claims 1 to 6, **characterized in that** the torque-transmission members (15) each comprise a threaded nut (16) in which a threaded section (17) of the respective drive-train longitudinal section (6a, 6b, 6c, 7a, 7b) engages in each case, and **in that** the threaded nut (16) forms a housing (16a) in which, located opposite the threaded section (17), a following drive-train longitudinal section (6b, 6c, 7b) engages, a stop (19) for limiting the extending movement in the conveying direction being arranged at the end (18) of said longitudinal section.

8. Apparatus according to Claim 7, **characterized in that** a switchable clutch (20) is arranged in the torque-transmission members (15), in each case between the threaded section (17) and the drive-train longitudinal section (6a, 6b, 6c, 7a, 7b).

9. Apparatus according to one of Claims 1 to 8, **characterized in that** provided on the motor shaft (9a) of the drive motor (9) is an angle-of-rotation transmitter (21), and/or provided in the region of one or more drive-train longitudinal sections (6a, 6b, 6c, 7a, 7b) is an angle-of-rotation sensor (22), with a signal generator (23) which is arranged on the respective drive-train longitudinal section (6a, 6b, 6c, 7a, 7b) and is assigned to the respective angle-of-rotation sensor (22).

10. Apparatus according to one of Claims 1 to 9, **characterized in that** the movement in the conveying direction is limited by means of a switching lug (24) and clamping-displacement sensors (25), which switch off the drive motor (9) in the clamping-position switching state.

11. Apparatus according to Claim 10, **characterized in that** the movement is limited in the conveying direction by a compression spring (25) which is inserted between the stop (19) and the housing (16a) of the threaded nut (16).

## Revendications

1. Dispositif pour stocker et déstocker un article, en particulier pour le stockage ou le déstockage dans un entrepôt, au moyen d'un dispositif de transport de construction basse qui peut être déplacé au-dessus de l'article et qui comporte à ses extrémités des paires de bras pour des articles mutuellement distants qui sont pivotantes en sens contraires dans un plan vertical au moyen d'entraînements en pivotement,
**caractérisé en ce que** le dispositif de transport est réalisé sous forme de dispositif télescopique plat, **en ce que** les bras sont disposés à l'avant et à l'arrière sur une partie (3a) télescopique plate pouvant être maximalement déployée, **en ce que** des axes (5a, 5b) de pivotement des paires (4a, 4b) de bras sont respectivement reliés à des lignes (6, 7) d'entraînement en pivotement qui s'étendent dans la direction (8) longitudinale de la partie (3a) télescopique plate pouvant être maximalement déployée et sont montées sur celle-ci, **en ce qu'**une seule ligne (6 ou 7) d'entraînement en pivotement est entraînée au moyen d'un moteur (9) d'entraînement, et **en ce que** les lignes (6, 7) d'entraînement en pivotement sont reliées en entraînement dans les régions des paires (4a, 4b) de bras au moyen d'une transmission (10) d'entraînement transversal, un angle de pivotement étant réglable.

2. Dispositif suivant la revendication 1, **caractérisé en ce que** les paires (4a, 4b) de bras peuvent être, aux extrémités (3a, 3b) de la partie (3a) télescopique plate, respectivement rentrées par pivotement dans la hauteur de profit de ladite partie (3a).

3. Dispositif suivant la revendication 1 ou 2, **caractérisé en ce que** les lignes (6, 7) d'entraînement en pivotement s'étendent en voisinage immédiat et en parallèle.

4. Dispositif suivant la revendication 3, **caractérisé en ce que** les lignes (6, 7) d'entraînement en pivotement sont, dans la région des bras (4c) de levier, mutuellement reliées au moyen d'un palier (10a) à engrenage droit comme transmission (10) d'entraînement transversal.

5. Dispositif suivant l'une des revendications 1 à 4, **caractérisé en ce qu'**une commande par programme commande le mouvement de réglage des paires (4a, 4b) de bras ou encore des bras (4c) de levier pour des articles (1) de largeurs différentes et/ou de hauteurs différentes.

6. Dispositif suivant l'une des revendications 1 à 5, **caractérisé en ce que** des guides (12, 13) linéaires pour des paliers (14) de pivotement des paires (4a, 4b) de bras sont disposés aux deux extrémités, dans la direction de transport, dans la partie (3a) télescopique plate du dispositif (3) de transport, et **en ce que** les lignes (6, 7) d'entraînement en pivotement sont respectivement divisées en tronçons (6a, 6b, 6c, 7a, 7b) longitudinaux distincts, qui sont mutuellement reliés au moyen d'organes (15) axialement coulissants de transmission de couple de rotation.

7. Dispositif suivant l'une des revendications 1 à 6, **caractérisé en ce que** les organes (15) de transmission de couple de rotation sont chacun constitués d'un écrou (16) fileté dans lequel s'engage respectivement une partie (17) filetée du tronçon (6a, 6b, 6c, 7a, 7b) longitudinal respectif de ligne d'entraînement, et **en ce que** l'écrou (16) fileté forme un boîtier (16a) dans lequel s'engage, en vis-à-vis de la partie (17) filetée, un tronçon (6b, 6c, 7b) longitudinal suivant de ligne d'entraînement, à l'extrémité (18) duquel est disposée une butée (19) pour limiter la course de déploiement dans la direction de transport.

8. Dispositif suivant la revendication 7, **caractérisé en ce qu'**un accouplement (20) pouvant être activé est disposé dans les organes (15) de transmission de couple de rotation, chaque fois entre la partie (17) filetée et le tronçon (6a, 6b, 6c, 7a, 7b) longitudinal de ligne d'entraînement.

9. Dispositif suivant l'une des revendications 1 à 8, **caractérisé en ce qu'**un transmetteur (21) d'angle de rotation est prévu sur l'arbre (9a) de moteur du moteur (9) d'entraînement, et/ou un capteur (22) d'angle de rotation est prévu dans la région d'un ou plusieurs tronçons (6a, 6b, 6c ; 7a, 7b) longitudinaux de ligne d'entraînement, avec un transmetteur (23) de signaux disposé sur le tronçon (6a, 6b, 6c ; 7a, 7b) longitudinal respectif de ligne d'entraînement et associé au capteur (22) respectif d'angle de rotation.

10. Dispositif suivant l'une des revendications 1 à 9, **caractérisé en ce que** le déplacement dans la direction de transport est limité au moyen d'un talon (24) de commutation et de capteurs (25) de course de serrage, qui coupent le moteur (9) d'entraînement lorsque la position de serrage est activée.

11. Dispositif suivant la revendication 10, **caractérisé en ce que** la limitation du mouvement dans la direction de transport est formée par un ressort (25) de pression installé entre la butée (19) et le boîtier (16a) de l'écrou (16) fileté.
